# EUROPÄISCHE PATENTSCHRIFT

(11) **EP 2 349 716 B1**
(45) Veröffentlichungstag und Bekanntmachung des Hinweises auf die Patenterteilung: **10.07.2013**
(21) Anmeldenummer: 09745689.1
(22) Anmeldetag: 07.05.2009
(51) Int. Cl.: B32B 37/10, B30B 5/02, B30B 7/02

(54) **LAMINIEREINRICHTUNG FÜR DAS LAMINIEREN VON BAUTEILEN**
LAMINATING DEVICE FOR LAMINATING COMPONENTS
DISPOSITIF DE LAMINAGE DESTINÉ À LAMINER DES ÉLÉMENTS DE CONSTRUCTION

(30) Priorität: 15.05.2008 DE 102008023774
(43) Veröffentlichungstag der Anmeldung: 03.08.2011
(73) Patentinhaber: Meier Solar Solutions GmbH, 46395 Bocholt (DE)
(72) Erfinder: STEVENS, Hans-Gerd, 46399 Bocholt (DE); EHLTING, Herbert, 46395 Bocholt (DE); SCHINDLER, Raphael, 46419 Anholt (DE)
(74) Vertreter: Hauck Patent- und Rechtsanwälte
(86) Internationale Anmeldenummer: PCT/EP2009/055533
(87) Internationale Veröffentlichungsnummer: WO 2009/138356

(56) Entgegenhaltungen:
- DE-U1- 8 628 684
- FR-A- 2 587 273

## Beschreibung

Die vorliegende Erfindung betrifft eine Laminiereinrichtung für das Laminieren von schichtweise aufgebauten Bauteilen durch kombinierte Anwendung von Andrückkraft und Wärme, bestehend aus wenigstens zwei in einem gemeinsamen Maschinengestell übereinander angeordneten, ein oder mehrere Bauteilstapel aufnehmende Laminierkammern, wobei jede Laminierkammer eine Bauteilauflage und wenigstens eine Heizeinrichtung aufweist, wobei oberhalb der Bauteilauflage relativ zu dieser beweglich mindestens eine elastische und/oder flexible Andrückmembran druckdicht eingespannt ist, die jeweils einen unteren, der Bauteilauflage zugewandten Kammerraum von einem oberen, der Bauteilauflage abgewandten Kammerraum trennt, und wobei zumindest der untere Kammerraum während eines Laminiervorgangs luftdicht verschließbar, sowie evakuierbar und belüftbar ist.

Eine Laminiereinrichtung der oben genannten Art ist aus der FR-A-2 587 273 bekannt. Mit der bekannten Laminiereinrichtung wird erreicht, dass mehrere Bauteilstapel in je einer eigenen, etagenartig übereinander angeordneten Laminierkammer mit einer in jede Bauteilauflage integrierten Heizeinrichtung unter Einsatz einer entsprechenden Anzahl von Andrückeinrichtungen gleichzeitig übereinander laminiert werden können. Für das Laminieren unter Vakuum ist vorgesehen, dass die Laminierkammem durch wenigstens einen Deckel oder eine Tür geöffnet und geschlossen werden können und im geschlossenen Zustand luftdicht und zur Ausführung des Laminiervorganges evakuierbar sind, um beispielsweise Luftblaseneinschlüsse zwischen den zu laminierenden Schichten eines Bauteilstapels zu vermeiden. Hierzu werden alle Kammerräume, welche die Bauteilstapel aufnehmen, während des Laminiervorgangs evakuiert. Nachteilig dabei ist jedoch, dass für jeden zu evakuierenden Kammerraum eine Vakuumeinrichtung notwendig ist, deren Leitungsanschlüsse mit den Etagen höhenbeweglich sein müssen, was einen großen Bauaufwand und eine komplizierte Leitungsführung bedeutet.

Um diese Nachteile zu vermeiden, zeigt die DE-A-10 2004 027 545 eine Laminiereinrichtung, bei der eine luftdicht verschließbare Gehäusekammer um alle Laminierkammern herum gebaut ist, deren Evakuierung während des Laminiervorgangs gleichzeitig das Vakuum in den unteren Kammerräumen mit den Bauteilstapeln in allen Laminierkammern erzeugt. Dadurch wird zwar die Vielzahl an Vakuumeinrichtungen und/oder Vakuumleitungen vermieden, aber die Vakuumeinrichtung muss sehr leistungsstark sein und der Evakuierungsvorgang des sehr großen Volumens dauert sehr lange. Desweiteren ist der Zugang zu den einzelnen Laminierkammern für den Beschickungsvorgang und den Entladungsvorgang durch eine Tür bzw. die notwendigen Verschlüsse des luftdichten Gehäuses stark erschwert. Zudem ist die notwendige Dichtigkeit einer so großflächigen Tür nur sehr aufwendig herstellbar, beispielsweise mit aufblasbaren Gummihohldichtungen, wie dies in der DE-A-37 025 007 A1 für eine Etagenpresse beschrieben ist.

Für die vorliegende Erfindung stellt sich deshalb die Aufgabe, eine Laminiereinrichtung der genannten Art zu schaffen, welche die oben genannten Nachteile vermeidet und die insbesondere eine einfache und schnelle Beschickung und Entladung der Laminierkammern ermöglicht und mit der durch eine kompakte Bauweise eine rasche Evakuierung und eine gleichmäßige Aufheizung der Bauteilstapel und damit eine Verkürzung des Produktionstakts erreichbar ist und die durch eine einfache und kostengünstige Modulbauweise der einzelnen Etagen mit möglichst wenig Bauteilen kostengünstiger herstellbar und betreibbar ist.

Die Lösung dieser Aufgabe gelingt erfindungsgemäß mit einer Laminiereinrichtung der eingangs genannten Art, die dadurch gekennzeichnet ist, dass alle oder gruppenweise mehrere untere Kammerräume über eine gemeinsame Leitung evakuierbar und belüftbar sind, dass die gemeinsame Leitung zumindest während eines Beschickungsvorgangs in einer geöffneten Lage der Laminierkammern in einzelne offene Leitungsabschnitte unterteilt ist und dass die Leitungsabschnitte während des Laminiervorganges in einer geschlossenen Lage der Laminierkammern durch druckdichte Verbindungsstellen zu der gemeinsamen Leitung verbunden sind, wobei die druckdichte Verbindung selbsttätig durch die Überführung der Laminierkammern von ihrer geöffneten Lage in ihre geschlossenen Lage herstellbar ist.

Mit der erfindungsgemäßen Laminiereinrichtung wird erreicht, dass mehrere Bauteile in je einer eigenen Laminierkammer übereinander unter Einsatz einer entsprechenden Anzahl von Andrückeinrichtungen gleichzeitig laminiert werden können. Dabei werden vorteilhaft für die Evakuierung und Belüftung der jeweils unteren Kammerräume keine externen Leitungen, wie flexible Schläuche, benötigt, was die Konstruktion der Laminiereinrichtung vereinfacht und ihren Betrieb sicherer macht. Da jeder Laminierkammer und damit jedem zu laminierenden Bauteilstapel eine eigene An-drückeinrichtung in Form je einer Andrückmembran zugeordnet ist, werden die Bauteile jeweils individuell angedrückt, wobei sich die Membran jeweils an die Oberfläche des Bauteils problemlos anpasst, auch und insbesondere, wenn das Bauteil in seiner Oberfläche uneben ist. Mit jeder Membran lässt sich eine gleichmäßige Andrückkraft auch über größere Flächen erzeugen. Da in der erfindungsgemäßen Laminiereinrichtung viele Laminierungen zugleich erfolgen, wird ein schneller Produktionstakt bei einer hohen Flexibilität hinsichtlich verschiedener Bauteile erreicht. Die Aufstellfläche für die Laminiereinrichtung ist dabei praktisch nicht größer ist als bei einer herkömmlichen Laminiereinrichtung mit einer einzigen Laminierkammer. Damit lässt sich ein zur Verfügung stehender Aufstellungsraum in einem Gebäude viel effektiver nutzen, weil auch die Höhe eines Gebäudes für die Aufstellung der Laminiereinrichtung genutzt wird. Außerdem ist eine Laminiereinrichtung mit mehreren Laminierkammern mit jeweils integrierter Andrückeinrichtung kostengünstiger herstellbar und betreibbar als eine entsprechende Anzahl von Laminier-einrichtungen mit jeweils nur einer einzelnen Laminierkammer mit Andrückeinrichtung.

In weiterer Ausgestaltung der Erfindung ist vorgesehen, dass die Laminierkammern einen Deckel, Seitenwände und einen Boden aufweisen, die zur Überführung der Laminierkammern von der geöffneten Lage in die geschlossene Lage und zurück einzeln und/oder in Gruppen relativ zueinander und/oder relativ zu dem Maschinengestell in der Höhe verfahrbar sind. Die vertikale Bewegbarkeit der Laminierkammern erlaubt eine günstige Betriebsweise der Laminiereinrichtung, da zum Be- und Entladen die Laminierkammern auseinander gefahren und für den Laminiervorgang zusammen gefahren werden können. Damit die Laminierkammern bei ihrem vertikalen Verfahren innerhalb der Laminiereinrichtung eine exakte Ausrichtung beibehalten, kann z.B. jede Laminierkammer je einen eigenen Plattenrahmen für ihre Halterung aufweisen, der jeweils seinerseits in einem in dem Maschinengestell angeordneten Führungsrahmen, der die vertikale Bewegbarkeit der Laminierplatten ermöglicht, geführt und gehaltert ist.

Weiterhin können in vorteilhafter Weise die Seitenwände der Laminierkammern als Membranrahmen zur Befestigung der Andrückmembran in der entsprechenden Laminierkammer ausgeführt sein, was insgesamt die Zahl der notwendigen Bauteile verringert.

In der Laminiereinrichtung sind vorzugsweise die Seitenwände druckdicht mit dem Deckel verbunden und liegen im geschlossenen Laminierzustand der Laminierkammern druckdicht gegen die Außenluft auf dem Boden der Laminierkammer auf.

Eine besonders vorteilhafte und einfache Ausführung der erfindungsgemäßen Laminiereinrichtung ergibt sich dadurch, dass der Deckel der Laminierkammer einer Etage gleichzeitig den Boden und/oder die Bauteilauflage der Laminierkammer der darüberliegenden Etage bildet. Dabei wird die Bauteilauflage einer Laminierkammer am einfachsten jeweils von der Oberseite einer Laminierplatte gebildet, die gleichzeitig als Heizplatte ausgeführt sein kann. Die Andrückeinrichtung der Laminierkammer ist jeweils an der Unterseite der Laminierplatte der darüberliegenden Laminierkammer angeordnet. Damit ist im zusammengefahrenen Zustand der Laminierkammern mittels der Andrückeinrichtung jeweils in Richtung zu der Laminierplatte der darunterliegenden Laminierkammer die Andrückkraft ausübbar. Mit dieser Konstruktion wird vorteilhaft erreicht, dass die Heizplatten im Verhältnis zu der Andrückeinrichtung jeweils unten liegen, wodurch die zu laminierenden Bauteile zunächst zur Erwärmung auf die Laminierplatten aufgelegt werden können. Nach dem Zusammenfahren der Laminierplatten können dann die Andrückeinrichtungen die für den Laminiervorgang benötigte Andrückkraft auf die Bauteilstapel gegen die Laminierplatten ausüben. Die Laminierplatten und die Andrückeinrichtungen sind im zusammengefahrenen Zustand der Laminierkammern relativ zueinander fixiert, so dass die Andrückeinrichtungen auf diese Weise eine Abstützung erfahren, die zusätzlich zu den Kräften, die sich aus dem Eigengewicht und den Druckkräften ergeben, ein Abheben der Laminierkammern voneinander durch die von den Andrückeinrichtungen ausgeübten Kräfte verhindern kann.

Da die Membranen im laufenden Betrieb der Laminiereinrichtung einer Ermüdung und einem Verschleiß unterliegen, ist zweckmäßig weiter vorgesehen, dass jede Membran auf/in je einen eigenen, von der zugehörigen Platte trennbaren Membranrahmen dichtend aufgespannt oder aufgeschraubt oder eingespannt ist. Auf diese Weise ist bei Bedarf ein schneller und einfacher Austausch von Membranen möglich, ohne dass es zu einem längeren Stillstand der Laminiereinrichtung kommt. Die Membranrahmen sind dabei in der zusammengefahrenen Stellung derart druckdicht an der Laminierplatte angelegt, dass der jeweilige Membranrahmen gleichzeitig die Seitenwände der entsprechenden Laminierkammer bilden kann.

In einer weiteren vorteilhaften Ausführung kann die erfindungsgemäße Laminiereinrichtung derart gestaltet werden, dass der Boden der untersten Laminierkammer auf seiner Unterseite als Deckel zusammen mit einem unteren Maschinengestellboden einen evakuierbaren und belüftbaren Hilfsvakuumraum bildet und/oder dass der Deckel der obersten Laminierkammer als Boden zusammen mit einem oberen Maschinengestelldeckel einen Hilfsvakuumraum bildet. Damit lassen sich während eines Laminiervorgangs Differenzdrücke auf die Laminierplatte der untersten Laminierkammer als Bauteilauflage und auf die Platte der obersten Laminierkammer als Deckel weitgehend vermeiden. Zur Bildung der Hilfsvakuumräume ist vorgesehen, die Räume zwischen der untersten Laminierkammer und dem Maschinengestell und/oder der obersten Laminierkammer und dem Maschinengestell ebenfalls als luftdicht verschließbare Räume auszubilden, die evakuierbar und belüftbar sind und die als benachbarte Hilfsvakuumräume bis zu einem gewissen Grade in der Lage sind, wie eine benachbarte Laminierkammer zu wirken. Dadurch können auch die unterste und die oberste Laminierkammer mit im Wesentlichen gleichen Bauteilen wie alle anderen Laminierkammern ausgeführt werden, was eine insgesamt kostengünstige Herstellung und Wartung ermöglicht. Die Hilfsvakuumräume, die ja keinen Bauteilstapel enthalten, sind dabei zur Bildung des Raumes z.B. mit einem Distanzrahmen und/oder mehreren quer oder schräg zur Erstreckungsrichtung der untersten Laminierplatte als Boden der untersten Laminierkammer verlaufenden Distanzleisten als Abstandshalter versehen.

Werden die Distanzleisten in geeigneter Weise ausgeführt und an der Unterseite der untersten Laminierplatte befestigt, so können diese auch als Verstärkungsleisten dienen, die beim Andrücken auftretende Zusatzbelastungen auffangen und eine Durchbiegung der untersten Platte verhindern.

Analog kann auch zur Bildung des Hilfsvakuumraumes über der obersten Laminierkammer zwischen deren Deckel als Boden des Hilfsvakuumraumes und einem Maschinengestelldeckel vorgegangen werden.

Weitere vorteilhafte Ausführungen der erfindungsgemäßen Laminiereinrichtung können aus den Unteransprüchen entnommen werden.

Im Folgenden werden Ausführungsbeispiele der Erfindung anhand einer Zeichnung erläutert. Die Figuren der Zeichnung zeigen:
- Figur 1: eine Laminiereinrichtung in schematischer Darstellung in einer geschnittenen Seiteneinsicht, wobei der Übersichtlichkeit halber auf eine Schraffur verzichtet wurde,
- Figur 2: eine Laminiereinrichtung in offenem Zustand der Laminierkammern in einer Schrägansicht,
- Figur 3: eine Laminiereinrichtung in offenem Zustand der Laminierkammern in einer Vorderansicht, teilweise geschnitten,
- Figur 4: eine Laminiereinrichtung in offenem Zustand der Laminierkammern in einer Seitenansicht, teilweise vertikal geschnitten,
- Figur 5: einen vergrößerten Ausschnitt aus dem Inneren der Laminiereinrichtung gemäß Figur 3, ebenfalls im Vertikalschnitt,
- Figur 6: eine Laminiereinrichtung in geschlossenem Zustand der Laminierkammern in einer Vorderansicht, teilweise vertikal geschnitten,
- Figur 7: einen vergrößerten Ausschnitt aus dem Inneren der Laminiereinrichtung gemäß Figur 6, ebenfalls im Vertikalschnitt,
- Figur 8: einen nochmals vergrößerten Ausschnitt aus dem Ausschnitt der Laminiereinrichtung gemäß Figur 7, ebenfalls im Vertikalschnitt, und
- Figur 9: eine Laminiereinrichtung in geschlossenem Zustand der Laminierkammern in einer Seitenansicht, teilweise vertikal geschnitten.

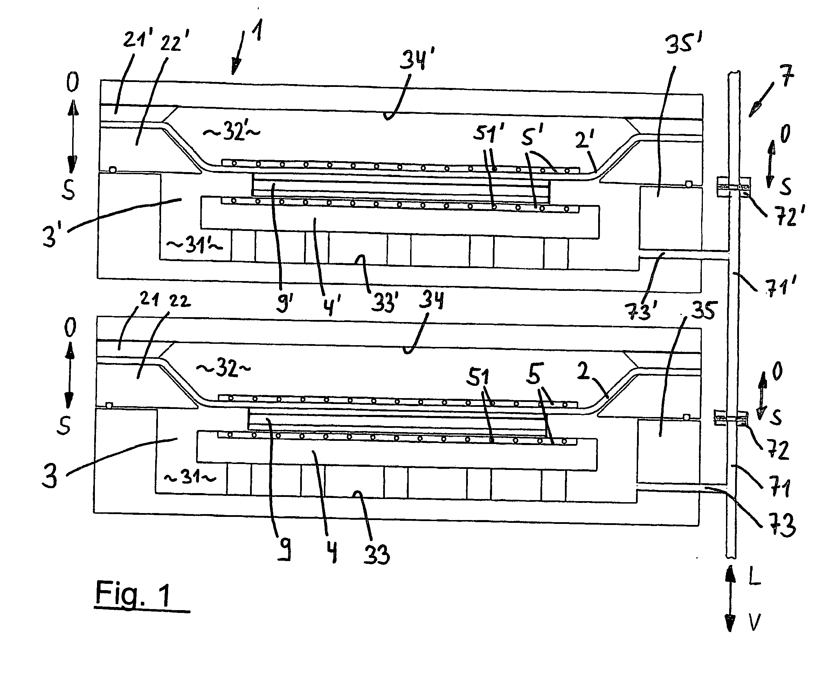

Figur 1 zeigt eine schematische Darstellung einer erfindungsgemäßen Laminiereinrichtung, vereinfacht auf ihre wichtigsten Bauteile. Die Figur zeigt keine vollständige Funktionseinheit, um die erfindungsgemäßen Merkmale übersichtlicher darstellen zu können.

Dabei besteht die in Figur 1 gezeigte Laminiereinrichtung aus zwei in einem nicht dargestellten Maschinengestell übereinander angeordneten ein oder mehrere Bauteilstapel 9, 9' aufnehmende Laminierkammern 3, 3', wobei jede Laminierkammer 3, 3' eine Bauteilauflage 4, 4' und wenigstens eine Heizeinrichtung 5, 5' aufweist und oberhalb der Bauteilauflage 4, 4' relativ zu dieser beweglich mindestens eine elastische und/oder flexible Andrückmembran 2, 2' druckdicht eingespannt ist, die jeweils einen unteren, der Bauteilauflage 4, 4' zugewandten Kammerraum 31, 31' von einem oberen, der Bauteilauflage 4, 4' abgewandten Kammerraum 32, 32' trennt, und wobei zumindest der untere Kammerraum 31, 31' während eines Laminiervorgangs luftdicht verschließbar, sowie evakuierbar V und belüftbar L ist. Dabei sind alle oder gruppenweise mehrere untere Kammerräume 31, 31' über eine gemeinsame Leitung 7 evakuierbar und belüftbar, und die gemeinsame Leitung 7 ist zumindest während eines Beschickungsvorgangs in der geöffneten Lage O der unteren Kammerräume 31, 31' in einzelne offene Leitungsabschnitte 71, 71' unterteilt.

Die Leitungsabschnitte 71, 71' sind während des Laminiervorganges in der geschlossenen Lage S durch druckdichte Verbindungsstellen 72, 72' zu der gemeinsamen Leitung 7 verbunden, wobei die druckdichte Verbindung selbsttätig durch die Überführung der Laminierkammern 3, 3' von ihrer geöffneten Lage O in ihre geschlossenen Lage S herstellbar ist.

Die Laminierkammern 3, 3' weisen jeweils einen Deckel 34, 34', Seitenwände 35, 35' und einen Boden 33, 33' auf, die zur Überführung der Laminierkammern 3, 3' von der geöffneten Lage O in die geschlossene Lage S und zurück einzeln und/oder in Gruppen relativ zueinander und/oder relativ zu dem nicht dargestellten Maschinengestell in der Höhe verfahrbar sind. Die Seitenwände 35, 35' sind als Membranrahmen 21, 22, 21', 22' zur Befestigung der Andrückmembran 2, 2' in oder an der entsprechenden Laminierkammer 3, 3' ausgeführt.

Die Leitungsabschnitte 71, 71' sind hier schematisch dargestellt mit den relativ zueinander und/oder relativ zum Maschinengestell in der Höhe verfahrbaren Seitenwänden 35, 35' der Laminierkammern 3, 3' gekoppelt und sind über Querabzweigungen 73, 73' mit den unteren Kammerräumen 31, 31' verbunden. In der hier dargestellten geschlossenen Stellung S ist die druckdichte Verbindung durch ein Aufeinanderliegen von flanschartigen Dichtflächen 72, 72' der Leitungsabschnitte 71, 71' ausgeführt.

Für die einzelnen Laminierkammern 3, 3' ist jeweils mindestens eine Heizeinrichtung 5, 5' vorgesehen, die als Heizplatte oder Heizmatte in oder an der Bauteilauflage 4, 4' und/oder als heizbare Membran 2, 2' mit integral in oder an der Membran ausgeführten Heizelementen 51, 51' ausgeführt ist.

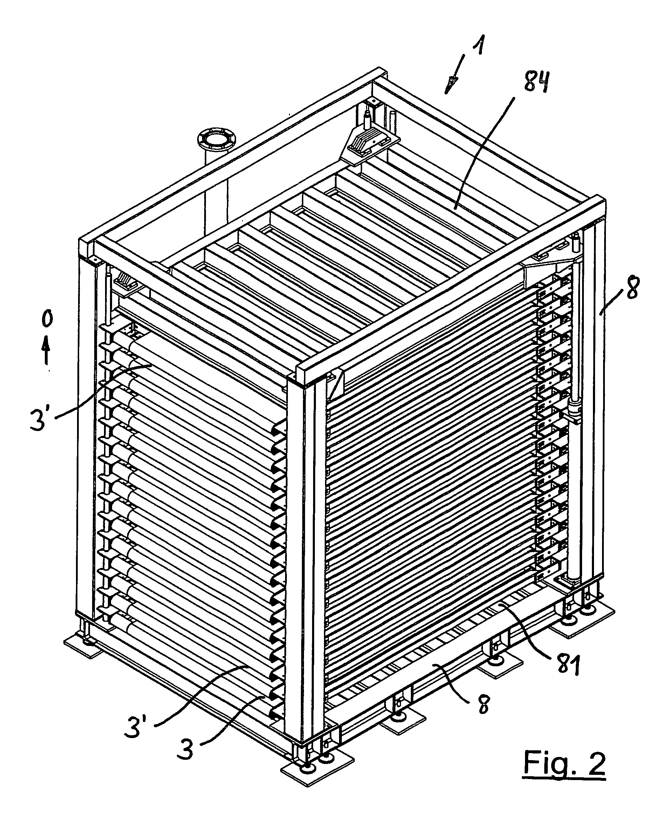

Figur 2 zeigt eine Laminiereinrichtung 1 in offenem Zustand der Laminierkammern in einer Gesamtansicht schräg von vorn oben. Zu erkennen sind die in einem gemeinsamen Maschinengestell 8 übereinander angeordneten, ein oder mehrere Bauteilstapel aufnehmende Laminierkammern 3, 3', wobei diese zur Überführung der Laminierkammern 3, 3' von der geöffneten Lage O in die geschlossene Lage S und zurück relativ zueinander und/oder relativ zu dem Maschinengestell 8 in der Höhe verfahrbar sind. Unterhalb der untersten Laminierkammer 3 befindet sich ein unterer Maschinengestellboden 81, oberhalb der obersten Laminierkammer befindet sich ein Maschinengestelldeckel 84.

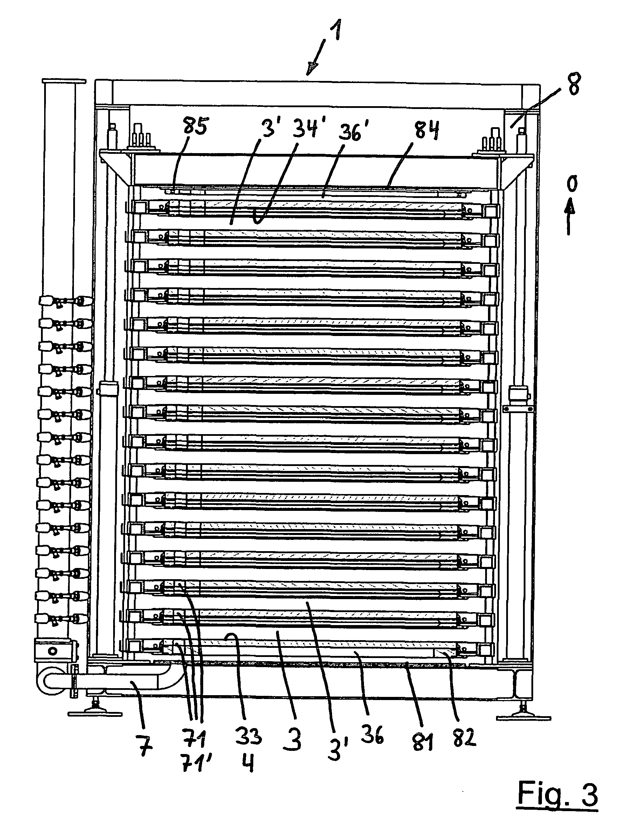

Figur 3 zeigt die Laminiereinrichtung 1 von Figur 2 in einem Vertikalschnitt von vorn, wobei hier deutlich wird, dass der Boden 33 der untersten Laminierkammer 3 auf seiner Unterseite als Deckel zusammen mit dem unteren Maschinengestellboden 81 einen evakuierbaren und belüftbaren Hilfsvakuumraum 36 bildet und der Deckel 34' der obersten Laminierkammer 3' als Boden zusammen mit einem oberen Maschinengestelldeckel 84 einen Hilfsvakuumraum 36' bildet. Mit den Hilfsvakuumräumen 36, 36' lassen sich während eines Laminiervorgangs Differenzdrücke auf die Platte als Bauteilauflage 4 der untersten Laminierkammer 3 und auf die Platte als Deckel 34' der obersten Laminierkammer 3' weitgehend vermeiden.

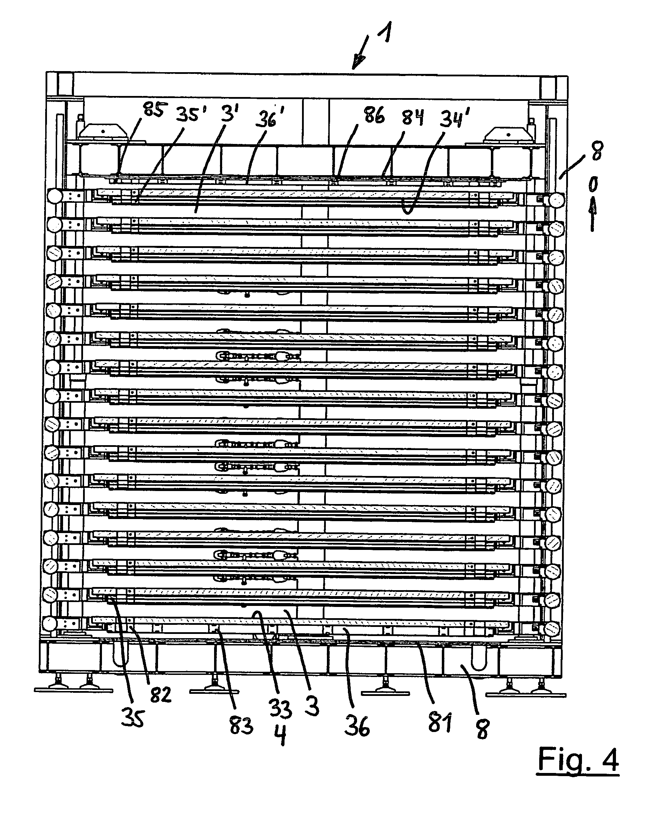

Figur 4 zeigt die gleiche Laminiereinrichtung 1 wie Figur 3 in der vertikal geschnittenen Seitenansicht, wodurch erkennbar wird, dass der Boden 33 der untersten Laminierkammer 3 an seiner Unterseite zur Bildung des Hilfsvakuumraumes 36 einen Distanzrahmen 82 als Seitenwand 35 und mehrere quer zu einer seiner Erstreckungsrichtungen verlaufende Distanzleisten 83 aufweist. Dabei sind die Distanzleisten 83 derart ausgeführt und angebracht, dass sie eine Durchbiegung des Bodens 33 bzw. der Bauteilauflage 4 der untersten Laminierkammer 3 während des Andrückvorgangs verhindern oder vermindern. Ebenso weist der Maschinengestelldeckel 84 an seiner Unterseite zur Bildung des Hilfsvakuumraumes 36' einen Distanzrahmen 85 als Seitenwand 35' und mehrere quer oder schräg zu einer seiner Erstreckungsrichtungen verlaufenden Distanzleisten 86 auf.

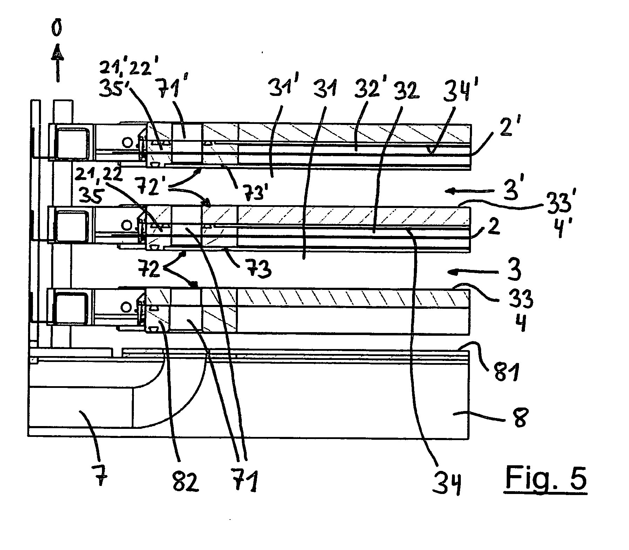

Figur 5 zeigt einen vergrößerten Ausschnitt aus dem Inneren der Laminiereinrichtung gemäß Figur 3, ebenfalls in einem Vertikalschnitt. Die Laminierkammern 3, 3' befinden sich in ihrer geöffneten Lage, wodurch die gemeinsame Leitung 7, die zum Evakuieren und Belüften der unteren Kammerräume 31, 31' dient, in einzelne offene Leitungsabschnitte 71, 71' unterteilt ist. Die Seitenwände 35, 35' der Laminierkammern 3, 3' werden durch den jeweiligen Membranrahmen 21, 22 und 21', 22' gebildet, in den die jeweilige Andrückmembran 2, 2' druckdicht eingespannt ist.

Die Seitenwand 35 ist dabei mit der Laminierplatte, die an ihrer Unterseite den Deckel des oberen Kammerraums 32 der Laminierkammer 3 bildet und die an ihrer Oberseite die Bauteilauflage 4' und/oder die Heizplatte der darüberliegenden Laminierkammer 3' darstellt, druckdicht verbunden. Die Leitungsabschnitte 71, 71' der gemeinsamen Leitung 7 zum Evakuieren und Belüften der unteren Kammerräume 31, 31' sind als Durchgangsbohrungen durch die relativ zueinander und/oder relativ zum Maschinengestell 8 in der Höhe verfahrbaren Seitenwände 35, 35' der Laminierkammern 3, 3' ausgeführt. Die Querabzweigungen 73, 73' von den Leitungsabschnitten 71, 71' sind als nutförmiger Kanal in der Oberfläche der flanschartigen Dichtfläche 72, 72' ausgeführt, können aber ebenso als Querbohrungen zur Verbindung der Leitungsabschnitte 71, 71' mit dem jeweiligen unteren Kammerraum 31, 31' ausgeführt werden.

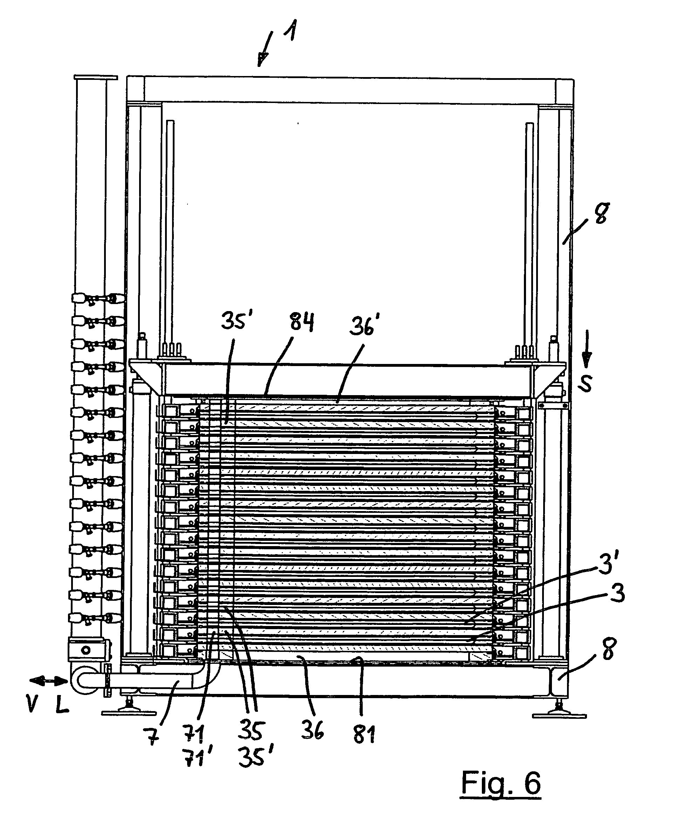

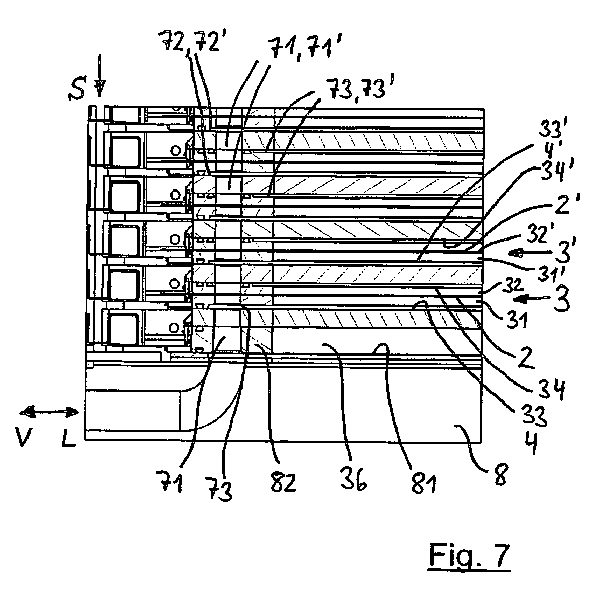

Figur 6 zeigt die Laminiereinrichtung 1 analog zu Figur 3 in geschlossenem Zustand der Laminierkammern. Die Laminierkammern 3, 3' sind durch Verfahren in der Höhe relativ zu dem Maschinengestell 8 von der geöffneten Lage O in die geschlossene Lage S überführt worden und die Seitenwände der einzelnen Laminierkammern 35, 35' liegen druckdicht gegen die Außenluft auf den jeweiligen Böden 33, 33' auf, wodurch auch die Dichtflächen 72, 72' druckdicht aufeinander liegen, wie in einem vergrößerten Ausschnitt in Figur 7 unschwer zu erkennen ist. Durch das druckdichte Aufeinanderliegen der Dichtflächen 72, 72' werden die Leitungsabschnitte 71, 71', die hier als Durchgangsbohrungen durch die Seitenwände 35, 35' und die Böden 33, 33' ausgeführt sind, druckdicht zu der gemeinsamen Leitung 7 zum gemeinsamen Evakuieren V und Belüften L der unteren Kammerräume 31, 31' verbunden. Dies geschieht in einfachster Weise durch das Aufeinanderliegen der Durchgangsbohrungen in der geschlossenen Lage der Laminierkammern 3, 3'. Natürlich können anstelle der Durchgangsbohrungen auch separate Leitungsabschnitte, etwa in Form von Rohrabschnitten, verwendet werden, die mit den Wänden der Laminierkammern in der Höhe verfahrbar sind und beispielsweise über flanschartige Dichtflächen verfügen, welche dann in geschlossener Lage druckdicht an- oder ineinander geführt und/oder verbunden sind.

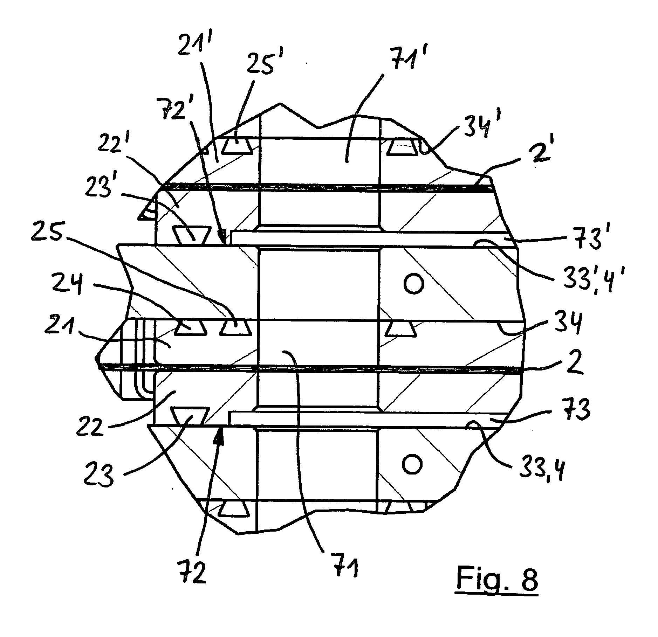

Wie aus dem Ausschnitt der Figur 7 und aus einem hieraus nochmals vergrößerten Ausschnitt in Figur 8 weiterhin hervorgeht, ist es wichtig, dass die einzelnen Wandteile der Laminierkammern in deren geschlossener Lage zum einen druckdicht gegen die Außenumgebung auf- oder ineinander liegen und zum anderen die druckdichte Trennung der unteren Kammerräume 31, 31' von den oberen Kammerräumen 32, 32' gewährleistet bleibt.

Die Abdichtung gegen die Außenumgebung wird dabei in üblicher Weise durch umlaufende Rahmendichtungen 23, 23' und 24, 24' sichergestellt. Die innere Abdichtung zwischen dem unteren Kammerraum und dem oberen Kammerraum wird zum einen in üblicher Weise durch die Membran 2, 2' selbst mittels deren druckdichter Einspannung in dem die Seitenwand des oberen Kammerraumes bildenden Membranrahmen 21, 22, 21', 22' erreicht. Zum anderen ist der durch die Seitenwand des oberen Kammerraums verlaufende Leitungsabschnitt 71, 71' an der Verbindungsfläche zum Deckel 34, 34' mit einer die Leitung umgebenden Rundumdichtung 25, 25' versehen, um die Druckdichtigkeit der Leitung 7 zu den oberen Kammerräumen 32, 32' hin zu gewährleisten.

Die hier dargestellte Ausführung bewirkt auf eine sehr einfache, robuste und preiswerte Weise die druckdichte Verbindung der einzelnen Leitungsabschnitte 71, 71' zum Evakuieren V und Belüften L der unteren Kammerräume 31, 31'. Selbstverständlich sind hierzu auch weitere bekannte Steck- und/oder Kuppelverbindungen von Rohr- oder Schlauchleitungen für eine erfindungsgemäße Laminiereinrichtung denkbar.

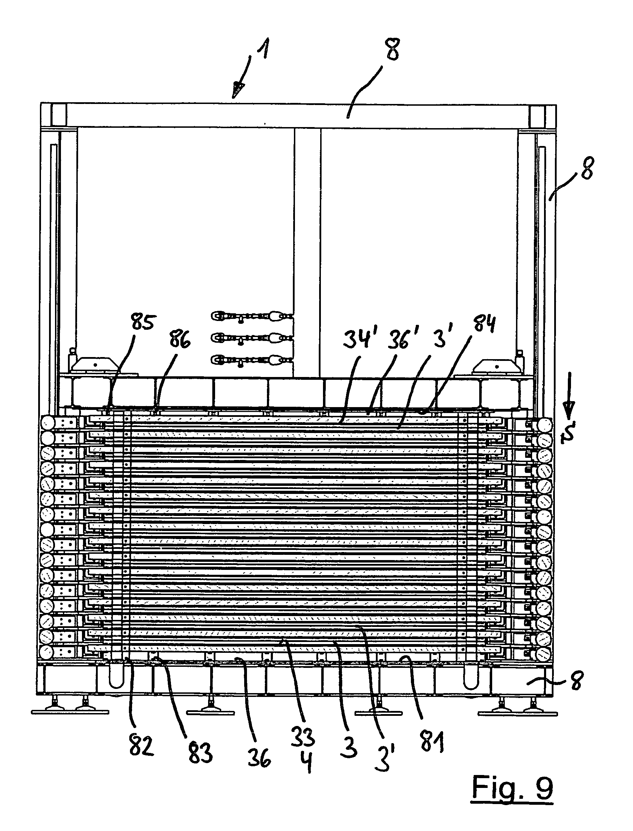

Figur 9 zeigt schließlich in einer Seitenansicht noch einmal eine Laminiereinrichtung in geschlossenem Zustand der Laminierkammern 3, 3'. In dieser Ansicht ist insbesondere erkennbar, dass der Boden 33 der untersten Laminierkammer 3 auf seiner Unterseite als Deckel zusammen mit einem unteren Maschinengestellboden 81 einen evakuierbaren und belüftbaren Hilfsvakuumraum 36 bildet und dass der Deckel 34' der obersten Laminierkammer 3' als Boden zusammen mit einem oberen Maschinengestelldeckel 84 einen Hilfsvakuumraum 36' bildet. Damit lassen sich während eines Laminiervorgangs Differenzdrücke auf den Boden 33 der untersten Laminierkammer 3 als Bauteilauflage 4 und auf die Platte der obersten Laminierkammer 3' als Deckel 34' weitgehend vermeiden. Zur Bildung der Hilfsvakuumräume ist dabei vorgesehen, die Räume zwischen der untersten Laminierkammer 3 und dem Maschinengestell 8 und zwischen der obersten Laminierkammer 3' und dem Maschinengestell 8 ebenfalls als luftdicht verschließbare Räume 36, 36' auszubilden, die evakuierbar und belüftbar sind und die als benachbarte Hilfsvakuumräume bis zu einem gewissen Grade in der Lage sind, wie eine benachbarte Laminierkammer zu wirken. Dies wird dadurch erreicht, dass das Maschinengestell 8 einen unteren Maschinengestellboden 81 und einen oberen Maschinengestelldeckel 84 aufweist, die jeweils druckdicht gegen die Außenumgebung mit dem Maschinengestell 8 ausgeführt sind. Dadurch sind auch die Hilfsvakuumräume 36, 36' gemeinsam und/oder unabhängig von den Kammerräumen 31, 31', 32, 32' der Laminierkammern 3, 3' evakuierbar und belüftbar.

Die Hilfsvakuumräume 36, 36', die ja keinen Bauteilstapel enthalten, sind jeweils zur Bildung eines evakuierbaren und belüftbaren Raumes mit einem Distanzrahmen 82, 85 und/oder mehreren quer oder schräg zur Erstreckungsrichtung der Laminierplatten verlaufenden Distanzleisten 83, 86 als Abstandshalter versehen. Werden die Distanzleisten 83 dabei in geeigneter Weise ausgeführt und beispielsweise fest an der Unterseite der untersten Bauteilauflage 4 angebracht, so können die Distanzleisten 83 auch als Verstärkungsleisten dienen, die beim Andrücken auftretende Zusatzbelastungen auffangen und eine Durchbiegung der untersten Bauteilauflage 4 verhindern oder vermindern.

## Patentansprüche

1. Laminiereinrichtung (1) für das Laminieren von schichtweise aufgebauten Bauteilen durch kombinierte Anwendung von Andrückkraft und Wärme, bestehend aus wenigstens zwei in einem gemeinsamen Maschinengestell (8) übereinander angeordneten, ein oder mehrere Bauteilstapel (9, 9') aufnehmende Laminierkammern (3, 3'), wobei jede Laminierkammer (3, 3') eine Bauteilauflage (4, 4') und wenigstens eine Heizeinrichtung (5, 5') aufweist, wobei oberhalb der Bauteilauflage (4, 4') relativ zu dieser beweglich mindestens eine elastische und/oder flexible Andrückmembran (2, 2') druckdicht eingespannt ist, die jeweils einen unteren, der Bauteilauflage (4, 4') zugewandten Kammerraum (31, 31') von einem oberen, der Bauteilauflage (4, 4') abgewandten Kammerraum (32, 32') trennt, und wobei zumindest der untere Kammerraum (31, 31') während eines Laminiervorgangs luftdicht verschließbar sowie evakuierbar (V) und belüftbar (L) ist,
**dadurch gekennzeichnet,**
- **dass** alle oder gruppenweise mehrere untere Kammerräume (31, 31') über eine gemeinsame Leitung (7) evakuierbar und belüftbar sind,
- **dass** die gemeinsame Leitung (7) zumindest während eines Beschickungsvorgangs in einer geöffneten Lage (O) der Laminierkammern (3, 3') in einzelne offene Leitungsabschnitte (71, 71') unterteilt ist und
- **dass** die Leitungsabschnitte (71, 71') während des Laminiervorganges in einer geschlossenen Lage (S) der Laminierkammern (3, 3') durch druckdichte Verbindungsstellen (72, 72') zu der gemeinsamen Leitung (7) verbunden sind, wobei die druckdichte Verbindung selbsttätig durch die Überführung der Laminierkammern (3, 3') von ihrer geöffneten Lage (O) in ihre geschlossenen Lage (S) herstellbar ist.

2. Laminiereinrichtung nach Anspruch 1, **dadurch gekennzeichnet, dass** die Laminierkammern (3, 3') einen Deckel (34, 34'), Seitenwände (35, 35') und einen Boden (33, 33') aufweisen, die zur Überführung der Laminierkammern (3, 3') von der geöffneten Lage (O) in die geschlossene Lage (S) und zurück einzeln und/oder in Gruppen relativ zueinander und/oder relativ zu dem Maschinengestell (8) in der Höhe verfahrbar sind.

3. Laminiereinrichtung nach Anspruch 2, **dadurch gekennzeichnet, dass** die Seitenwände (35, 35') als Membranrahmen (21, 22, 21', 22') zur Befestigung der Andrückmembran (2, 2') in oder an der entsprechenden Laminierkammer (3, 3') ausgeführt sind.

4. Laminiereinrichtung nach Anspruch 2 oder 3, **dadurch gekennzeichnet, dass** die Seitenwände (35, 35') druckdicht mit dem Deckel (34, 34') verbunden sind und im Laminierzustand (S) druckdicht gegen die Außenluft auf dem Boden (33, 33') aufliegen.

5. Laminiereinrichtung nach einem der Ansprüche 2 bis 4, **dadurch gekennzeichnet, dass** der Deckel (34) der Laminierkammer (3) einer Etage auf seiner Oberseite den Boden (33') und/oder die Bauteilauflage (4') der Laminierkammer (3') der darüberliegenden Etage bildet.

6. Laminiereinrichtung nach einem der Ansprüche 2 bis 5, **dadurch gekennzeichnet, dass** der Boden (33) der untersten Laminierkammer (3) auf seiner Unterseite als Deckel zusammen mit einem unteren Maschinengestellboden (81) einen evakuierbaren und belüftbaren Hilfsvakuumraum (36) bildet und/oder dass der Deckel (34') der obersten Laminierkammer (3') als Boden zusammen mit einem oberen Maschinengestelldeckel (84) einen Hilfsvakuumraum (36') bildet.

7. Laminiereinrichtung nach einem der Ansprüche 2 bis 6, **dadurch gekennzeichnet, dass** der Boden (33) der untersten Laminierkammer (3) an seiner Unterseite zur Bildung des Hilfsvakuumraumes (36) einen Distanzrahmen (82) als Seitenwand (35) und/oder mehrere quer oder schräg zu einer seiner Erstreckungsrichtungen verlaufende Distanzleisten (83) aufweist.

8. Laminiereinrichtung nach Anspruch 7, **dadurch gekennzeichnet, dass** die Distanzleisten (83) derart angebracht und ausgeführt sind, dass sie eine Durchbiegung des Bodens (33) der untersten Laminierkammer (3) während des Andrückvorgangs verhindern.

9. Laminiereinrichtung nach einem der Ansprüche 2 bis 8, **dadurch gekennzeichnet, dass** der Maschinengestelldeckel (84) an seiner Unterseite zur Bildung des Hilfsvakuumraumes (36') einen Distanzrahmen (85) und/oder mehrere quer oder schräg zu einer seiner Erstreckungsrichtungen verlaufenden Distanzleisten (86) aufweist.

10. Laminiereinrichtung nach einem der vorhergehenden Ansprüche, **dadurch gekennzeichnet, dass** die Leitungsabschnitte (71, 71') mit den relativ zueinander und/oder relativ zum Maschinengestell (8) in der Höhe verfahrbaren Seitenwänden (35, 35') der Laminierkammern (3, 3') gekoppelt sind und über Querabzweigungen (73, 73') mit den unteren Kammerräumen (31, 31') verbunden sind.

11. Laminiereinrichtung nach Anspruch 10, **dadurch gekennzeichnet, dass** die druckdichte Verbindung durch ein Aufeinanderliegen von flanschartigen Dichtflächen (72, 72') der Leitungsabschnitte (71, 71') nach dem Erreichen der geschlossenen Lage (S) ausgeführt ist.

12. Laminiereinrichtung nach Anspruch 10 oder 11, **dadurch gekennzeichnet, dass** die Leitungsabschnitte (71, 71') als Durchgangsbohrungen durch die relativ zueinander und/oder relativ zum Maschinengestell (8) in der Höhe verfahrbaren Seitenwände der Laminierkammern (3, 3') ausgeführt sind.

13. Laminiereinrichtung nach Anspruch 12, **dadurch gekennzeichnet, dass** die Querabzweigungen (73, 73') als eine oder mehrere Querbohrungen oder als mindestens ein offener Kanal in der Oberfläche der flanschartigen Dichtfläche ausgeführt sind.

14. Laminiereinrichtung nach einem der vorhergehenden Ansprüche, **dadurch gekennzeichnet, dass** die Andrückmembran (2) als heizbare Membran mit mindestens einem darin und/oder daran integral ausgeführten Heizelement ausgeführt ist.

15. Laminiereinrichtung nach einem der vorhergehenden Ansprüche, **dadurch gekennzeichnet, dass** die Andrückmembran (2) als Mehrfachmembran mit jeweils einem evakuierbaren und belüftbaren Zwischenraum zwischen den einzelnen Membranen ausgeführt ist.

## Claims

1. A laminating device (1) for laminating components formed in layers by the combined use of compressive force and heat, said device consisting of at least two laminating chambers (3, 3') arranged one above the other in a common machine frame (8) and receiving one or several stacks (9, 9') of components, wherein each laminating chamber (3, 3') has a component support (4, 4') and at least one heating device (5, 5') wherein at least one elastic and/or flexible pressure membrane (2, 2') is clamped in a pressure-tight manner above the component support (4, 4'), mobile in relation to the same, said membrane respectively separating a lower chamber space (31, 31') facing the component support (4, 4') from an upper chamber space (32, 32') facing away from the component support (4, 4'), and wherein at least the lower chamber space (31, 31') can be sealed in an airtight manner, evacuated (V) and aerated (L) during a laminating process,
**characterized in that**
- all or groups of a plurality of lower chamber spaces (31, 31') can be evacuated and aerated by a common line (7),
- the common line (7) is divided into individual open line sections (71, 71') at least during a feeding process, in an open position (O) of the laminating chambers (3, 3'), and
- the line sections (71, 71') are connected to the common line (7) during the laminating process, in a closed position (S) of the laminating chambers (3, 3'), by means of pressure-tight connection points (72, 72'), wherein the pressure-tight connection can be automatically generated by the transition of the laminating chambers (3, 3') from the open position (0) thereof to the closed position (S) thereof.

2. The laminating device according to claim 1, **characterized in that** the laminating chambers (3, 3') have a lid (34, 34'), sidewalls (35, 35') and a bottom (33, 33') which are movable in the height individually and/or in groups relative to one another and/or relative to the machine frame (8) for the transition of the laminating chambers (3, 3') from the open position (O) thereof to the closed position (S) thereof and back.

3. The laminating device according to claim 2, **characterized in that** the sidewalls (35, 35') are formed as membrane frame (21, 22, 21', 22') for the fixation of the pressure membrane (2, 2') in or at the corresponding laminating chamber (3, 3').

4. The laminating device according to claim 2 or 3, **characterized in that** the sidewalls (35, 35') are connected to the lid (34, 34') in a pressure-tight manner and lie upon the bottom (33, 33') in a pressure-tight manner with respect to the outer atmosphere in the laminating condition (S) thereof.

5. The laminating device according to one of the claims 2 to 4, **characterized in that** the lid (34) of the laminating chamber (3) of one floor forms on its upper side the bottom (33') and/or the component support (4') of the laminating chamber (3') of the floor thereabove.

6. The laminating device according to one of the claims 2 to 5, **characterized in that** the bottom (33) of the lowermost laminating chamber (3) forms an auxiliary vacuum room (36) which can be evacuated and aerated together with a lower machine frame bottom (81) on its lower side as lid and/or that the lid (34') of the uppermost laminating chamber (3') forms an auxiliary vacuum room (36') together with an upper machine frame lid (84) as bottom.

7. The laminating device according to one of the claims 2 to 6, **characterized in that** the bottom (33) of the lowermost laminating chamber (3) has a distance frame (82) as sidewall (35) and/or several distance slats (83) extending transversely or in an inclined manner with respect to its extending directions at its lower side for the formation of an auxiliary vacuum room (36).

8. The laminating device according to claim 7, **characterized in that** the distance slats (83) are mounted and formed in such a manner that they prevent a bending of the bottom (33) of the lowermost laminating chamber (3) during the pressing process.

9. The laminating device according to one of the claims 2 to 8, **characterized in that** the machine frame lid (84) has a distance frame (85) and/or several distance slats (86) extending transversely or in an inclined manner with respect to its extending directions at its lower side for the formation of an auxiliary vacuum room (36').

10. The laminating device according to one of the preceding claims, **characterized in that** the line sections (71, 71') are coupled with the sidewalls (35, 35') of the laminating chambers (3, 3') which are movable in the height relative to one another and/or relative to the machine frame (8) and are connected to the lower chamber rooms (31, 31') by means of cross branchings (73, 73').

11. The laminating device according to claim 10, **characterized in that** the pressure-tight connection is formed by the superposition of flange-like sealing surfaces (72, 72') of the line sections (71, 71') after reaching the closed position (S).

12. The laminating device according to claim 10 or 11, **characterized in that** the line sections (71, 71') are formed as through bores through the sidewalls of the laminating chambers (3, 3') which are movable in the height relative to one another and/or relative to the machine frame (8).

13. The laminating device according to claim 12, **characterized in that** the cross branchings (73, 73') are formed as one or several cross bores or as at least one open channel in the surface in the flange-like sealing surfaces.

14. The laminating device according to one of the preceding claims, **characterized in that** the pressure membrane (2) is formed as heatable membrane with at least one heating element integrally formed therein and/or thereat.

15. The laminating device according to one of the preceding claims, **characterized in that** the pressure membrane (2) is formed as multiple membrane with a respective interspace between the individual membranes which can be evacuated and aerated.

## Revendications

1. Dispositif de laminage (1) destiné à laminer des éléments de construction à structure stratifiée par l'application combinée de pression d'application et de chaleur, se composant d'au moins deux chambres de laminage (3, 3') disposées l'une au-dessus de l'autre dans un bâti de machine commun (8) et contenant une ou plusieurs piles d'éléments de construction (9, 9'), dans lequel chaque chambre de laminage (3, 3') présente un support d'élément de construction (4, 4') et au moins un dispositif de chauffage (5, 5'), dans lequel au moins une membrane de pression élastique et/ou flexible (2, 2') est serrée de façon étanche à la pression au-dessus du support d'élément de construction (4, 4') de façon mobile par rapport à celui-ci, laquelle sépare respectivement un espace de chambre inférieur (31, 31') tourné vers le support d'élément de construction (4, 4') d'un espace de chambre supérieur (32, 32') détourné du support d'élément de construction (4, 4'), et dans lequel au moins l'espace de chambre inférieur (31, 31') peut être fermé de façon étanche à l'air ainsi qu'évacué (V) et ventilé (L) pendant une opération de laminage, **caractérisé en ce que**
- tous les espaces de chambre inférieurs (31, 31'), ou plusieurs de ceux-ci par groupes, peuvent être évacués et ventilés par une conduite commune (7),
- la conduite commune (7) est divisée en parties de conduite ouvertes individuelles (71, 71') au moins pendant une opération de revêtement dans une position ouverte (O) des chambres de laminage (3, 3'), et
- les parties de conduite (71, 71') sont raccordées à la conduite commune (7) par des points de raccordement étanches à la pression (72, 72') pendant l'opération de laminage dans une position fermée (S) des chambres de laminage (3, 3'), dans lequel le raccordement étanche à la pression peut être réalisé de manière automatique par le passage des chambres de laminage (3, 3') de leur position ouverte (O) à leur position fermée (S).

2. Dispositif de laminage selon la revendication 1, **caractérisé en ce que** les chambres de laminage (3, 3') présentent un couvercle (34, 34'), des parois latérales (35, 35') et un fond (33, 33') qui, pour le passage des chambres de laminage (3, 3') de la position ouverte (O) à la position fermée (S) et inversement, sont déplaçables en hauteur individuellement et/ou en groupes les uns par rapport aux autres et/ou par rapport au bâti de machine (8).

3. Dispositif de laminage selon la revendication 2, **caractérisé en ce que** les parois latérales (35, 35') sont réalisées sous forme de cadres de membrane (21, 22, 21', 22') pour la fixation de la membrane de pression (2, 2') dans ou sur la chambre de laminage correspondante (3, 3').

4. Dispositif de laminage selon la revendication 2 ou 3, **caractérisé en ce que** les parois latérales (35, 35') sont reliées au couvercle (34, 34') de façon étanche à la pression et reposent, à l'état laminé (S), sur le fond (33, 33') de façon étanche à la pression par rapport à l'air extérieur.

5. Dispositif de laminage selon l'une quelconque des revendications 2 à 4, **caractérisé en ce que** le couvercle (34) de la chambre de laminage (3) d'un étage forme, sur son côté supérieur, le fond (33') et/ou le support d'élément de construction (4') de la chambre de laminage (3') de l'étage supérieur.

6. Dispositif de laminage selon l'une quelconque des revendications 2 à 5, **caractérisé en ce que** le fond (33) de la chambre de laminage la plus basse (3) forme, sur son côté inférieur comme couvercle, conjointement avec un fond inférieur (81) du bâti de machine, un espace sous vide auxiliaire (36) pouvant être évacué et ventilé et/ou **en ce que** le couvercle (34') de la chambre de laminage la plus haute (3') comme fond forme, conjointement avec un couvercle supérieur (84) du bâti de machine, un espace sous vide auxiliaire (36').

7. Dispositif de laminage selon l'une quelconque des revendications 2 à 6, **caractérisé en ce que** le fond (33) de la chambre de laminage la plus basse (3) présente à son côté inférieur, pour la formation de l'espace sous vide auxiliaire (36), un cadre d'écartement (82) comme paroi latérale (35) et/ou plusieurs baguettes d'écartement (83) s'étendant transversalement ou en oblique par rapport à une de ses directions d'extension.

8. Dispositif de laminage selon la revendication 7, **caractérisé en ce que** les baguettes d'écartement (83) sont placées et réalisées de telle manière qu'elles empêchent une flèche du fond (33) de la chambre de laminage la plus basse (3) pendant l'opération de pression.

9. Dispositif de laminage selon l'une quelconque des revendications 2 à 8, **caractérisé en ce que** le couvercle (84) du bâti de machine présente à son côté inférieur, pour la formation de l'espace sous vide auxiliaire (36'), un cadre d'écartement (85) et/ou plusieurs baguettes d'écartement (86) s'étendant transversalement ou en oblique par rapport à une de ses directions d'extension.

10. Dispositif de laminage selon l'une quelconque des revendications précédentes, **caractérisé en ce que** les parties de conduite (71, 71') sont couplées avec les parois latérales (35, 35'), déplaçables en hauteur l'une par rapport à l'autre et/ou par rapport au bâti de machine (8), des chambres de laminage (3, 3') et sont raccordées aux espaces de chambre inférieurs (31, 31') par des déviations transversales (73, 73').

11. Dispositif de laminage selon la revendication 10, **caractérisé en ce que** l'assemblage étanche à la pression est réalisé par une superposition de faces d'étanchéité en forme de brides (72, 72') des parties de conduite (71, 71') lorsque la position fermée (S) a été atteinte.

12. Dispositif de laminage selon la revendication 10 ou 11, **caractérisé en ce que** les parties de conduite (71, 71') sont réalisées sous forme de perçages de passage à travers les parois latérales, déplaçables en hauteur l'une par rapport à l'autre et/ou par rapport au bâti de machine (8), des chambres de laminage (3, 3').

13. Dispositif de laminage selon la revendication 12, **caractérisé en ce que** les déviations transversales (73, 73') sont réalisées sous la forme d'un ou de plusieurs perçages transversaux ou sous la forme d'au moins un canal ouvert dans la surface des faces d'étanchéité en forme de brides.

14. Dispositif de laminage selon l'une quelconque des revendications précédentes, **caractérisé en ce que** la membrane de pression (2) est réalisée sous la forme d'une membrane chauffante avec au moins un élément chauffant réalisé intégralement dans ou sur celle-ci.

15. Dispositif de laminage selon l'une quelconque des revendications précédentes, **caractérisé en ce que** la membrane de pression (2) est réalisée sous la forme d'une membrane multiple avec chaque fois un espace intermédiaire pouvant être évacué et ventilé entre les membranes individuelles.
